# EUROPÄISCHE PATENTSCHRIFT

(11) **EP 0 872 401 B1**
(45) Veröffentlichungstag und Bekanntmachung des Hinweises auf die Patenterteilung: **01.10.2003**
(21) Anmeldenummer: 98105313.5
(22) Anmeldetag: 24.03.1998
(51) Int. Cl.: B62D 1/19

(54) **Lenksäule für Insassenschutzeinrichtungen und Sicherheitslenkungen**
Steering column for passenger protection devices and safety steering assemblies
Colonne de direction pour dispositifs de protection des passagers et direction de sécurité

(30) Priorität: 16.04.1997 DE 19715883
(43) Veröffentlichungstag der Anmeldung: 21.10.1998
(73) Patentinhaber: Volkswagen Aktiengesellschaft, 38436 Wolfsburg (DE)
(72) Erfinder: Sinnhuber, Ruprecht, Dipl.-Ing., 38518 Gifhorn (DE); Wohllebe, Thomas, Dipl.-Ing., 38110 Braunschweig (DE)
(74) Vertreter: Neubauer, Hans-Jürgen, Dipl.-Phys.

(56) Entgegenhaltungen:
- EP-A- 0 668 192
- EP-A- 0 728 652
- DE-A- 3 021 808
- DE-A- 4 418 628
- DE-A- 19 532 043
- DE-U- 29 514 314
- DE-U- 29 620 375
- GB-A- 2 282 574
- JP-A- 48 045 877
- US-A- 3 434 367
- US-A- 3 813 961
- US-A- 3 907 330
- US-A- 4 514 645
- US-A- 4 531 619
- US-A- 5 205 790
- US-A- 5 351 977
- US-A- 5 553 888
- US-A- 5 617 763
- ANONYMOUS: "COMPUTER CONTROLLED ENERGY ABSORBING STEERING COLUMN FOR AUTOMOTIVE USE" RESEARCH DISCLOSURE, KENNETH MASON PUBLICATIONS, HAMPSHIRE, GB, Nr. 359, 1. März 1994 (1994-03-01), Seiten 157-159, XP000440547 ISSN: 0374-4353
- ANONYMOUS: "COMPUTER MONITORED ENERGY ABSORBING STEERING COLUMN" RESEARCH DISCLOSURE, KENNETH MASON PUBLICATIONS, HAMPSHIRE, GB, Nr. 359, 1. März 1994 (1994-03-01), Seite 164 XP000440550 ISSN: 0374-4353
- PATENT ABSTRACTS OF JAPAN vol. 1997, no. 01, 31. Januar 1997 (1997-01-31) & JP 08 230594 A (NIPPON SEIKO KK), 10. September 1996 (1996-09-10)
- PATENT ABSTRACTS OF JAPAN vol. 016, no. 438 (M-1309), 11. September 1992 (1992-09-11) & JP 04 151348 A (ASHIMORI IND CO LTD), 25. Mai 1992 (1992-05-25)

## Beschreibung

Die Erfindung betrifft ein Lenkrad für ein Fahrzeug gemäß dem Oberbegriff des Patentanspruchs 1.

Aus der US 5,351,977 ist ein Lenkradairbag bekannt, der in einem Lenkradnabenbereich angeordnet ist, wobei im Bereich der Lenkradnabe eine Abdeckung ausgebildet ist, die durch den sich aufblasenden Airbag aufgerissen wird. Die Abdeckung wird dabei in Richtung zum Fahrzeuginsassen hin geöffnet, was ein gewisses Gefährdungspotential für einen vor dem Lenkradkranz sitzenden Fahrzeuginsassen, insbesondere für kleinere Fahrzeuginsassen, die nahe beim Lenkrad sitzen, darstellt.

Entsprechende Aufbauten eines Lenkradairbags in Verbindung mit einem Lenkrad sind auch aus der JP 0 823 05 94, EP 0 728 652 A2 und JP 0 415 13 48 bekannt, die die zuvor erwähnten Nachteile aufweisen.

Ebenso ist ein derartiger Aufbau aus der gattungsgemäßen US 3,907,330 bekannt, die ein Lenkrad für ein Fahrzeug, insbesondere zur Befestigung an einer Lenksäule, zeigt mit wenigstens einer im Bereich einer Nabe angeordneten Abdeckung, hinter der in einer Ruhestellung ein durch eine Treibladung befüllbares Gaskissen verborgen ist, und die bei einem Fahrzeugunfall durch das sich ausbreitende Gaskissen in eine Öffnungsstellung bewegbar ist, wobei die Abdeckung im Nabenbereich angelenkt ist.

Konkret ist hier im dem Fahrzeuginsassen zugewandten Abdeckungsbereich eine sternenförmige Sollaufreißlinienanordnung vorgesehen, entlang derer bei einer Gassackaktivierung die Abdeckung aufplatzt, so dass einzelne Abdeckklappenbereiche in Richtung Fahrzeuginsassen aufgeschwenkt werden, so dass diese in der zuvor beschriebenen Art und Weise ein gewisses Gefährdungspotential für Fahrzeuginsassen darstellen.

Der Erfindung liegt daher die Aufgabe zugrunde, ein Lenkrad für ein Fahrzeug bereitzustellen, mit dem das Gefährdungspotential für Fahrzeuginsassen beim Aufblasen eines in einem Nabenbereich des Lenkrades angeordneten Gaskissens erheblich reduziert werden kann.

Diese Aufgabe wird gelöst mit den Merkmalen des Anspruchs 1.

Gemäß der die Erfindung charakterisierenden Merkmale des Anspruchs 1 ist die Abdeckung so im Nabenbereich angelenkt bzw. angeordnet, dass die Abdeckung während der Öffnungsbewegung nicht in Richtung Fahrzeuginsassen nach vorne aus dem Lenkradkranz heraustritt.

D. h., dass gemäß der vorliegenden Erfindung eine derartige Anordnung zwischen Lenkradkranzebene und Lenkradnabe gewählt wird, dass die Abdeckung oder einzelne Teile davon während der Öffnungsbewegung nicht über die Lenkradkranzebene hinaus gelangen. Dadurch wird vorteilhaft das Gefährdungspotential für einen vor dem Lenkrad sitzenden Fahrzeuginsassen reduziert, da die Lenkradkranzebene eine natürliche Grenze darstellt, so dass auf jeden Fall sichergestellt ist, dass einzelne Abdeckungsteile während deren Aufschwenkens oder dergleichen nicht in Kontakt mit dem Fahrzeuginsassen gelangen können.

Vorteilhafte Ausführungsbeispiele der Erfindung sind in der Zeichnung dargestellt. Es zeigen in schematischer Darstellung
- Figur 1:: eine Lenksäule als Bestandteil einer darauf abgestimmten Insassenschutzeinrichtung,
- Figur 2:: einen Bausatz, aus dem eine Lenksäule erzeugbar ist,
- Figur 3:: eine erste Variante,
- Figur 4:: eine weitere Variante,
- Figur 5:: in einer Seitenansicht ein Lenkrad als Bestandteil der Insassenschutzeinrichtung,
- Figur 6:: eine perspektivische Darstellung für das Lenkrad in Figur 5.

Gleiche Bauteile weisen in allen Figuren die gleiche Bezifferung auf.

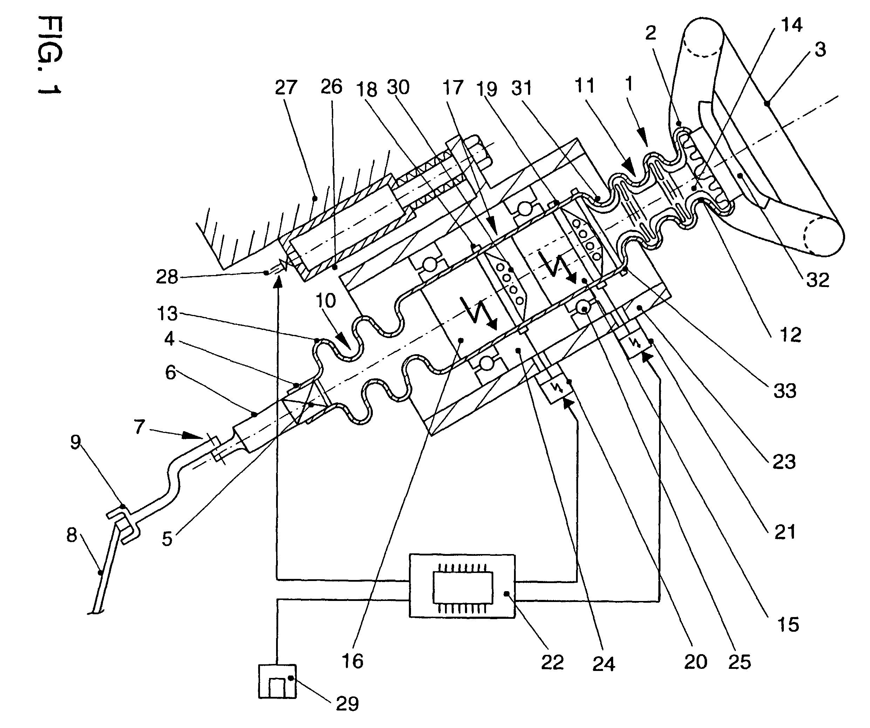

Man erkennt in Figur 1 eine insgesamt mit 1 bezeichnete Lenksäule mit einem ersten Anschlussprofil 2, auf dem ein Lenkrad 3 vorzugsweise mit einer Schnapparretierung angeordnet ist, und mit einem zweiten Anschlussprofil 4, das im Querschnitt eckig ausgeführt ist und ein entsprechend ausgebildetes Kupplungsstück 5 eines Lenksäulenunterteils 6 aufnimmt. Das in das Anschlussprofil 4 eingeschobene Lenksäulenunterteil 6 ist hier zweiteilig ausgeführt und weist einen ersten Stauchbereich 7 auf, der bei einem Frontalaufprall Beiträge zur Verkürzung der gesamten Lenksäule 1 leistet, wenn über eine Gelenkstange 8 und ein kardanisch ausgeführtes Gelenk 9 aufgrund von Verformungen im Vorderwagen hohe axiale Belastungen erzeugt werden. Weitere Stauchbereiche 10 und 11 werden realisiert durch Deformationsglieder 12 und 13, die hier faltenbalg- oder wellrohrartig ausgebildet sind. Die Festigkeit dieser Deformationsglieder 12, 13 ist so ausgelegt, dass im normalen Lenkbetrieb keine Verformungen durch Torsion oder Druckkraft auftreten können. Der mäanderförmige Verlauf des Wandungsquerschnittes gibt aber bei extremen Belastungen, wie sie während eines Fahrzeugunfalls auftreten, die Möglichkeit, die Lenksäule 1 nicht nur als ganzes zu verkürzen, sondern auch deren Neigung relativ zum hier nicht weiter dargestellten Fahrzeuginsassen zu verändern. Je nach den spezifischen Gegebenheiten in einem Fahrzeug kann auf diese Weise dafür gesorgt werden, dass das Lenkrad 3 sich stets in einer Position befindet, die eine ordnungsgemäße Entfaltung eines hier in der Lenksäule 1 untergebrachten Gaskissens 14 gewährleistet. Die Faltung des Gaskissens 14 ist hier nur symbolisch angedeutet. Bevorzugt wird eine Stülpfaltung, bei der zunächst eine oberste Lage mit dem Gasstrom aus Gasgeneratoren 15, 16 angeblasen wird und anschließend alle weiteren Faltlagen herausgezogen werden. Alternativ können aber auch andere Faltungstypen (sogenannte Raff-Faltung, Leporello-Faltung etc.) eingesetzt werden. Das Gaskissen 14 ist hier durch wenigstens einen der beiden Gasgeneratoren 15, 16 aufblasbar, die sich in einem Lenksäulenzwischenabschnitt 17 befinden. Jeder der Gasgeneratoren 15, 16 ist mit Ringanzündern 18, 19 ausgestattet, die über Auslöser nach Art von Schlagbolzeneinrichtungen 20, 21 (durch Kleintreibladung antreibbarer Schlagkörper, vorzugsweise bolzenartig ausgeführt) auf Veranlassung einer Steuereinrichtung 22 aktivierbar sind. Die Schlagbolzeneinrichtungen 20, 21 sind auf einer Lenksäulenaufnahme 23 befestigt, in der über Drehlager 24, 25 die Lenksäule 1 drehbar gelagert ist. Außerdem ist die Lenksäule 1 über einen Kraftbegrenzer 26 am symbolisch dargestellten Fahrzeugaufbau 27 abstützbar.

Die Kraft-Weg-Kennung des Kraftbegrenzers 26 ist in der dargestellten Ausführungsform über ein Drosselventil 28 beeinflussbar, das ebenfalls von der Steuereinheit 22 beaufschlagbar ist. Die Lenksäule 1 ist somit Bestandteil einer Insassenschutzeinrichtung, bei der über die von der Lenksäule 1 allein geleisteten Sicherheitsbeiträge hinaus weitere Maßnahmen zur Herabsetzung des Verletzungsrisikos für den Fahrzeuginsassen vorgesehen sind. Für die Beeinflussung der Kraft-Weg-Kennung des Kraftbegrenzers 26 können unterschiedliche Parameter einzeln oder in Kombination berücksichtigt werden. Ein mit 29 bezeichnetes Sensorsymbol repräsentiert ein Sensorsystem, mit dem beispielsweise folgende Parameter erfaßbar sind: Insassengewicht, Position eines hier nicht weiter dargestellten Fahrersitzes, Rückenlehnenneigung des Fahrersitzes, Zeitverhalten bei einer unfallbedingten Fahrzeugverzögerung, unfallbedingte Verformung des Fahrzeugaufbaus in Abhängigkeit vom Kollisionsort und/oder der Aufprallintensität, Anzahl von Aufprallbeschlagungen am Fahrzeug, Befüllungsverhalten des Gaskissens 14.

Von besonderer Bedeutung ist bei dem der Zeichnung dargestellten Ausführungsbeispiel die Faltung des Gaskissens 14 in der Weise, dass einige Falten gezielt in das Wellenprofil des Deformationsgliedes 12 hineinverlegt werden. Das über Diffusoren 30, 31 aus den Gasgeneratoren 15 und/oder 16 ausströmende Gas erzeugt in dem Gaskissen 14 zunächst einen auf eine Abdeckkappe 32 einwirkenden Öffnungsdruck. Die in das Wellenprofil hineingelegten Falten dämpfen die Ausbreitung des Gaskissens 14 definiert, um so den Fahrzeuginsassen nicht unnötig hart anzuschießen. Außerdem wird auf diese Weise sichergestellt, daß das Gaskissengewebe keiner überhöhten Druckbeanspruchung von innen ausgesetzt wird.

Beim Ausführungsbeispiel gemäß Figur 1 ist das Deformationsglied 12 gleichzeitig auch Gaskissenaufnahmebehälter. Ein vor dem Wellenprofil des Deformationsgliedes 14 angeordneter Befestigungsring 33 sorgt dafür, dass auch bei voller Druckbeaufschlagung des Gaskissens 14 dieses sich nicht von der Lenksäule 1 lösen kann.

Der Gasgenerator 15 ist hier torusartig ausgebildet, damit auch aus dem Diffusor 30 ausströmendes Gas in das Gaskissen 14 gelangen kann. Alternativ zu dem der Zeichnung dargestellten Ausführungsform kann allerdings der Diffusor 30 auch dem Stauchbereich 7 zugewandt sein, um dann über Austrittsöffnungen (hier nicht dargestellt) in dem Deformationsglied 13 beispielsweise einen Fußraum- oder Knieairbag befüllen zu können.

Die Aktivierung der Gasgeneratoren muss nicht zwangsläufig über eine mechanische Beaufschlagung von Ringanzündern erfolgen, sondern kann beispielsweise auch durch elektromagnetische Übertragung von Zündenergie erfolgen. Vorstellbar ist beispielsweise ein an der Lenksäulenaufnahme 23 befestigtes Spulensystem, das mit einem der jeweiligen Treibladung des Gasgenerators 15, 16 zugeordneten Zündspulensystem zusammenwirkt. Die hier beschriebene Einbringung der Zündung aus der drehfesten Lenksäulenaufnahme 23 heraus ermöglicht den Verzicht auf die bislang üblichen Wickelfedern. Die Montage der in Figur 1 gezeigten Lenksäulenanordnung wird damit erleichtert, weil lediglich in Einbaulage feststehende Bauteile miteinander zu verkabeln sind.

Das hier vorgeschlagene Konzept ist aber auch noch aus anderen Gründen fertigungstechnisch interessant. So ist beispielsweise ein Vormontagesatz vorstellbar, bei dem die als Rohrkörper ausgeführte Lenksäule 1 Aufnahmebehälter für das Gaskissen 14 und die Gasgeneratoren 15, 16 ist. In einer bevorzugten Ausführungsform ist dieser Rohrkörper ein durch Innenhochdruckumformung hergestelltes Bauelement, an dem alle für die erfindungsgemäße Funktion der Lenksäule 1 wichtigen Bauteilabschnitte direkt materialeinheitlich angeformt sind. Dies gilt insbesondere für die dem Lenksäulenunterteil 6 und dem Lenkrad 3 zugeordneten Adapterabschnitte, aber auch für die Gestalt der Deformationsglieder 12 an sich. Da mit der Innenhochdruckumformung Geometrien in weiten Grenzen variierbar sind, kann durch gezielte Wandstärkenwahl und Festlegung von Querschnitten ein Verformungsverhalten eingestellt werden, das verschiedenen Unfallsituationen möglichst gut gerecht wird. Durch Wandstärken- und/oder Geometrievariationen können für die Deformationsglieder 12 und 13 auch unterschiedliche Kraft-Weg-Kennungen gewählt werden, beispielsweise durch Wahl unterschiedlicher Durchmesser. Bevorzugt wird eine gegenüber dem zweiten Deformationsglied 13 weichere Kennung des oberen Deformationsgliedes 12, um nach voll entfaltetem Gaskissen 14 den darauf aufprallenden Kopf des Fahrzeuginsassen zunächst kraftbegrenzt abzustützen, bevor die aus dem Vorderwagenbereich resultierende Deformationskraft auf das Deformationsglied 13 einwirkt.

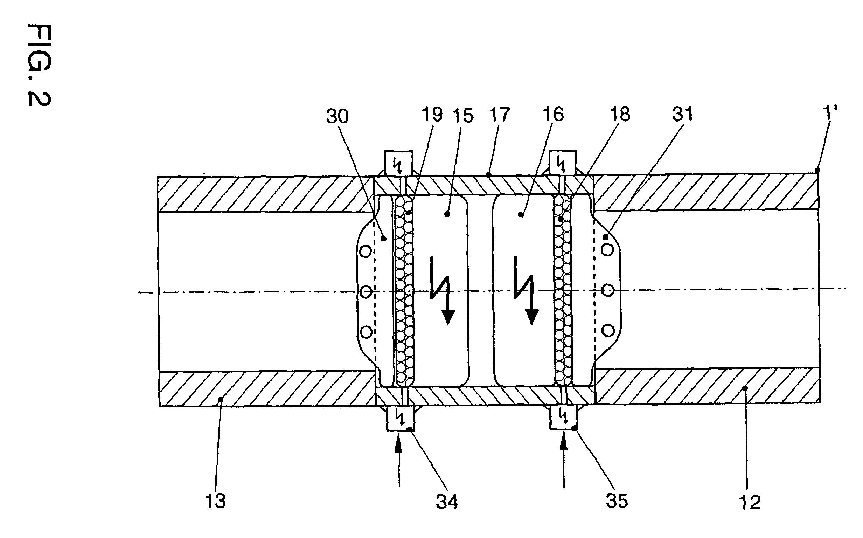

Alternativ zur Innenhochdruckumformung kann auch die Herstellung der Lenksäule 1 durch Rollen in Betracht gezogen werden. Vorzugsweise zu verwenden ist beispielsweise ein in Figur 2 dargestelltes Halbzeug 1', das aus Rohrabschnitten 12', 13' und 17' zusammengesetzt ist, die unterschiedliche Wandstärken aufweisen. Die unterschiedlichen Wandstärken können das Ergebnis eines Umformprozesses an einem rohrstangenförmigen Halbzeug sein oder aus der Verwendung von Rohrabschnitten herrühren, die im Ausgangszustand unterschiedliche Wandstärken aufweisen und dann beispielsweise durch Reibschweißung oder andere Fügetechniken zusammengesetzt worden sind.

Bei dem der Zeichnung dargestellten Ausführungsbeispiel sind beispielsweise der Lenksäulenzwischenabschnitt 17 und die Gasgeneratoren 15, 16 samt Diffusoren 30, 31 vorab zu einer Baugruppe zusammengesetzt worden. An diese Baugruppe werden dann entweder bereits vorverformte Deformationsglieder 12, 13 angesetzt oder Halbzeuge befestigt, die nach der Befestigung am Gehäuseabschnitt 17 noch einem Umformprozeß unterzogen werden. Alternativ wird auch die Integration wenigstens eines Gasgenerators samt Diffusor in einem innen glattwandig ausgeführten Halbzeug vorgeschlagen. Die axiale Fixierung dieser Gasgeneratoren erfolgt dann durch Einrollen der freien Enden. Ein für die Erzeugung der Deformationsgliedkontur notwendiger Rollvorgang kann also gleichzeitig zur Befestigung des Gasgenerators genutzt werden. Die einzelnen Bausätze oder einzelne Elemente der Bausätze können auch aus unterschiedlichen Werkstoffen zusammengesetzt sein.

Abweichend von dem in Figur 2 dargestellten Ausführungsbeispiel kann aber beispielsweise auch wenigstens eines der Deformationsglieder 12, 13 mit einem Diffusor zu einem Integralteil zusammengefasst werden, das dann mit dem die Gasgeneratoren 15, 16 bereithaltenden Lenksäulenzwischenabschnitt 17 bevorzugt mittels einer thermischen Fügetechnik verbunden ist. Gehäuseelemente 34, 35 für die Ringanzünder 18, 19 können als nachträglich befestigbare Aufsatzteile oder ebenfalls als Integralteile ausgeführt sein.

Die Gehäuse der Gasgeneratoren 15, 16 müssen nicht zwangsläufig als Einsatzstücke für Rohre ausgeführt sein. Vorstellbar ist auch die Verwendung des Lenksäulenzwischenabschnittes 17 direkt als Gehäuseteil.

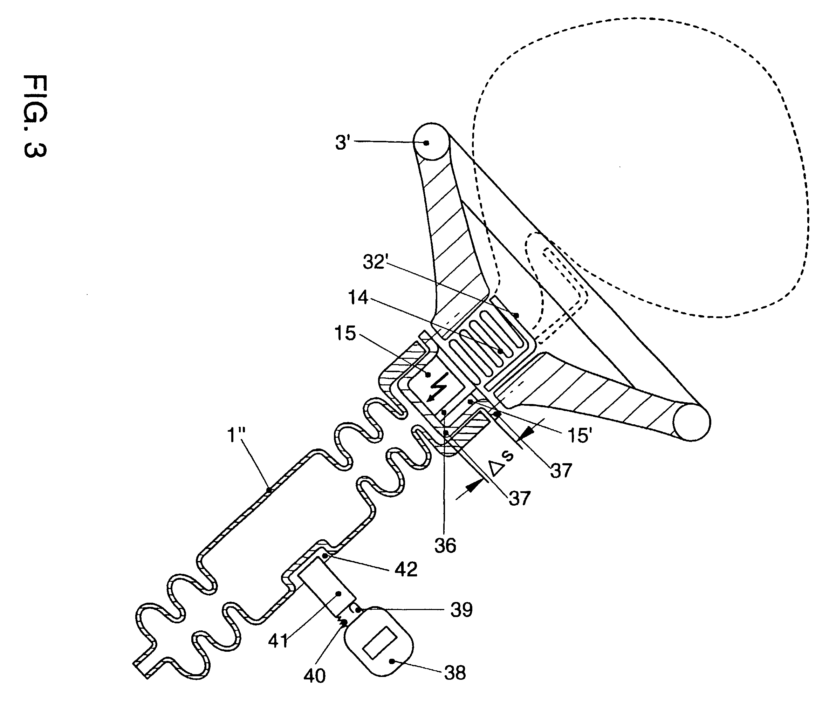

Von besonderer Bedeutung ist bei dem in Figur 3 dargestellten Ausführungsbeispiel eine in einer Lenkradnabe 3.3 eingelassene und formstabil ausgeführte Abdeckkappe 32', wobei das Lenkrad 3' beispielsweise in Analogie zu der in der WO 97/01460 beschriebenen Airbageinrichtung auf die Lenksäule 1" aufsetzbar ist. Die hier beschriebene Gestaltung des Lenkrades 3' ist aber auch an konventionell ausgeführten Lenksäulen realisierbar. Abweichend von den bislang üblichen Abdeckungsprinzipien ist hier die Abdeckung 32' nicht an der Oberfläche der Lenkradnabe 3.3 angelenkt, sondern nach innen verlegt worden. Ein Anlenkpunkt 36 ist nabeneinwärts beispielsweise in einem Bodenbereich eines Gasgeneratorgehäuses innerhalb einer Führung 15' befestigt. Das sich entfaltende Gaskissen 14 kann dann die Abdeckung 32' nur soweit in Öffnungsstellung bewegen, dass es nicht aus der Kontur des Lenkrads 3' heraustritt. Ein ggf. sehr dicht vor dem Lenkrad befindlicher Fahrer kann durch die Öffnungsbewegung der Kappe nicht verletzt werden. Dieser Öffnungszustand ist in Figur 3 mit Strichlinien dargestellt.

Im vorliegenden Fall kann sich der Befestigungspunkt 36 in einem Gasgeneratortopf 37, der gleichzeitig als mit der Lenksäule 1" korrespondierendes Anschlussteil ausgeführt ist, um eine vorgegebene Wegstrecke Δs nach vorn bewegen. Es wird hier ausdrücklich darauf hingewiesen, dass es sich bei der Figur 3 nur um eine schematische Prinzipdarstellung handelt. Die Anlenkung der Abdeckung 32' sowie auch deren konkrete Ausgestaltung kann breit variiert werden. So muss beispielsweise der Befestigungspunkt 36 nicht zwangsläufig in die Lenksäule 1" hineinverlegt sein. Bei einer entsprechend gestalteten Lenkradnabe kann die Befestigung der Abdeckung 32' auch unabhängig vom Gasgenerator an der Lenkradnabe selbst erfolgen. Die Abdeckung 32' selbst oder die besondere Art und Weise ihrer Anlenkung an der Lenkradnabe oder an der Lenksäule 1" kann ebenfalls energieabsorbierend ausgelegt sein, um so eine kontrollierte Entfaltung des Gaskissens 14 zu ermöglichen.

Ein symbolisch angedeutetes Zündschloss 38 mit einem Steuernocken 39 zeigt, dass eine erfindungsgemäß ausgeführte Lenksäule 1" auch mit einem Lenkradschloss ausgerüstet werden kann. Zu diesem Zweck ist beispielsweise ein von einer Zugfeder 40 in Offenstellung bewegbarer und als Klemmkörper 41 ausgeführter Verriegelungskörper über den Steuernocken 39 in eine Rastausnehmung 42 bewegbar, die hier durch Innenhochdruckumformung direkt in die Lenksäule 1' eingebracht worden ist. Als Rastausnehmung können aber auch einfache Bohrungen bzw. Lochungen vorgesehen werden. Alternativ zu dem in Figur 3 dargestellten Zündschlossprinzip können auch Verriegelungselemente im Bereich des Lenksäulenunterteils 6 (siehe Figur 1) vorgesehen werden, die dann beispielsweise durch elektrisch betätigbare Aktuatoren in Schließ- bzw. Offenstellung bewegbar sind.

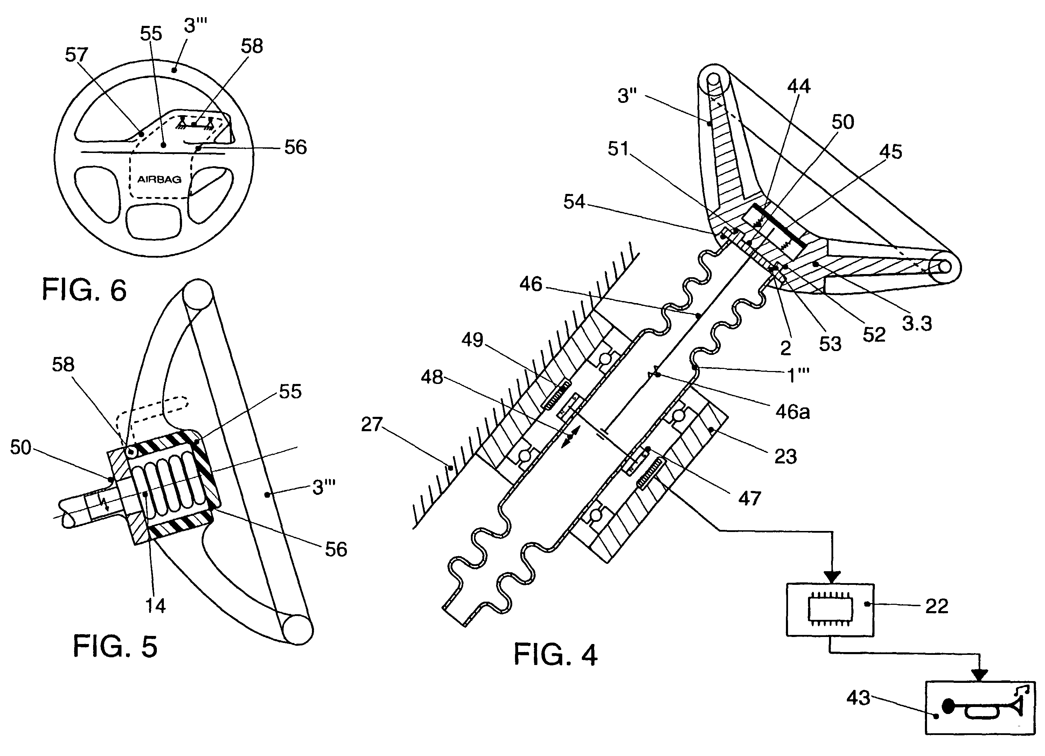

Das in Figur 4 gezeigte Ausführungsbeispiel betrifft eine Insassenschutzeinrichtung, deren wesentlicher Bestandteil eine Betätigungseinrichtung ist, durch die ein elektrischer Verbraucher - beispielsweise eine Hupe 43 - schaltbar ist. Als Bewegungsgeber fungiert eine auf Druckfedern 44 abgestellte Druckplatte 45, die hier über eine dünne Stange 46, welche mit einem bei unfallbedingter Überlast einknickenden oder abscherenden Schwächungsbereich 46a versehen ist, die Verschiebung eines ringförmigen Permanentmagneten 47 ermöglicht. Die gemäß Doppelpfeil 48 durchführbare Positionsverschiebung des Magneten 47 wird durch eine Ringspule 49 sensiert, die der Lenksäulenaufnahme 23 zugeordnet ist. Ein auf diese Weise erzeugtes Stellsignal wird dann in der Steuereinheit 22 verarbeitet und zur Betätigung der Hupe 43 genutzt. Zur berührungslosen Signalübertragung können abweichend von dem in Figur 4 dargestellten Prinzip auch Anordnungen auf kapazitiver oder optischer Basis in Betracht gezogen werden. Zur Gewinnung des Stellsignals wäre beispielsweise ein von der Druckplatte 45 bewegbares Dielektrikum zwischen Kondensatorplatten zu befördern, die der Lenksäulenaufnahme 23 zugeordnet sind. Als Bewegungsgeber können auch sogenannte Hupenfolien verwendet werden.

Das Lenkrad 3" weist im Bereich der Nabe 3.3 eine Flanschfläche 50 mit Rastausnehmungen 51, 52 auf, in die zur Lenkmomentenübertragung am Anschlussstück 2 angeformte Rastzapfen 53, 54 eingreifen. Die Verbindung zwischen der Flanschfläche 50 und dem Anschlussprofil erfolgt hier über eine nicht weiter dargestellte Klebung oder Verschraubung. Wichtig in diesem Zusammenhang ist eine Ausführung der Kopplung aus Nabe 3.3 und Lenksäule 1" als Baukastensystem. Ein stets einheitlich ausgebildeter Nabenkörper mit einheitlichen Airbageinbauten sowie einheitlichen Anschlussmaßen und Anschlussgeometrien kann kunden- bzw. fahrzeugspezifisch sehr unterschiedlich eingeschäumt sein. Mit gleicher Technik können so höchst variabel verschiedene optische Anmutungen für das als Schnittstelle Mensch-Fahrzeug wichtige Lenkrad 3" erzeugt werden.

Als Alternative zu der in Figur 3 gezeigten Abdeckung 32' wird eine in den Figuren 5 und 6 ersichtliche Integralkappe 55 vorgeschlagen, die mittels einer Sollreißnaht 56 aus einer Nabenverkleidung 57 herauslösbar ist, und zwar ähnlich wie bei Instrumententafeln (s. hierzu beispielsweise DE-A-43 06 149, US-A-5,072,967 oder US-A-5,350,191). Für diese Erfindung von wesentlicher Bedeutung ist die Anlenkung um eine der Flanschfläche 50 zugewandte Lageranordnung 58 (z. B. Drehgelenk, Filmscharnier oder dergleichen). Diese nabeneinwärts gerichtete Anlenkung stellt sicher, dass während der Öffnungsbewegung die Integralkappe 55 nicht in Richtung Fahrzeuginsassen nach vorn aus dem Lenkradkranz heraustritt Insbesondere nah dem Lenkrad sitzende Insassen - also beispielsweise kleine Frauen - werden somit nicht durch die Öffnungsbewegung der Gaskissenabdeckung einer erhöhten Gefährdung ausgesetzt. Die Integralkappe kann auch mehrteilig ausgeführt sein, so dass beispielsweise zwei nabeneinwärts angelenkte Klappenteile gemeinsam eine Öffnung freigeben. Die in den Figuren 3, 5 und 6 gezeigten Konzepte sind insbesondere auch im Zusammenhang mit der Unterbringung von Airbagkomponenten innerhalb der Lenksäule 1 interessant, weil durch die Verlagerung dieser Komponenten nach innen das von der Nabe aufzunehmende Volumen kleiner wird. Damit können die Naben selbst und folglich auch Abdeckungen für das Gaskissen 14 kleiner ausgeführt werden. Auch durch diese Maßnahme wird die Verletzungsgefährdung, die von der öffnenden Abdeckung ausgeht, reduziert.

## Patentansprüche

1. Lenkrad für ein Fahrzeug, insbesondere zur Befestigung an einer Lenksäule, mit wenigstens einer im Bereich einer Nabe (3. 3) angeordneten Abdeckung (32', 55), hinter der in einer Ruhestellung ein durch eine Treibladung befüllbares Gaskissen (14) verborgen ist, und die bei einem Fahrzeugunfall durch das sich ausbreitende Gaskissen (14) in eine Öffnungsstellung bewegbar ist, wobei die Abdeckung nabeneinwärts innerhalb oder auf der Nabe (3.3) angelenkt ist oder die Nabe durchdringend zur zumindest mittelbaren Befestigung an der Lenksäule (1, 1', 1") hergerichtet ist dergestalt, dass die Abdeckung während der Öffnungsbewegung nicht in Richtung Fahrzeuginsassen nach vorne aus dem Lenkradkranz heraustritt.

2. Lenkrad nach Anspruch 1, **dadurch gekennzeichnet, dass** die Abdeckung (32) als von dem sich ausbreitenden Gaskissen (14) nicht verformbarer Schalenkörper ausgeführt ist, der zur zumindest mittelbaren Halterung an der Nabe (3.3) oder der Lenksäule (1, 1', 1") einen nabeneinwärtsgerichteten Befestigungsabschnitt aufweist.

3. Lenkrad nach Anspruch 2, **dadurch gekennzeichnet, dass** die Abdeckung (55) integraler Bestandteil einer Nabenverkleidung (57) ist und aus dieser über Sollbruchoder Sollschwachstelten oder Reißlinien (56) von dem sich entfaltenden Gaskissen (14) herauslösbar ist und im Bereich eines lenksäulenseitigen Anschlussflansches (50) zumindest mittelbar an der Nabe (3.3) angelenkt ist.

4. Lenkrad nach Anspruch 2 oder 3, **dadurch gekennzeichnet, dass** der Befestigungsabschnitt oder die Abdeckung selbst einen Verformungsabschnitt mit vorgegebenen Deformationsvermögen aufweist oder innerhalb eines solchen bewegbar ist.

## Claims

1. Steering wheel for a vehicle, in particular for fastening to a steering column, with at least one cover (32', 55) which is arranged in the region of a hub (3.3) and behind which is concealed, in a position of rest, an airbag (14) capable of being filled by means of a propellent charge, and which, in the event of a vehicle accident, can be moved into an opening position by the expanding airbag (14), the cover being articulated within or on the hub (3.3), inwards in relation to the hub, or, passing through the hub, being set up for at least indirect fastening to the steering column (1, 1', 1''), in such a way that, during the opening movement, the cover does not emerge from the steering-wheel rim forwards in the direction of vehicle occupants.

2. Steering wheel according to Claim 1, **characterized in that** the cover (32) is designed as a shell body which cannot be deformed by the expanding airbag (14), and which, for at least indirect holding on the hub (3.3) or the steering column (1, 1', 1''), has a fastening portion directed inwards in relation to the hub.

3. Steering wheel according to Claim 2, **characterized in that** the cover (55) is an integral component of a hub trim (57) and can be released from the latter by the deploying airbag (14) via predetermined breaking or predetermined weak points or tearing lines (56) and is articulated at least indirectly on the hub (3.3) in the region of a connecting flange (50) located on the steering-column side.

4. Steering wheel according to Claim 2 or 3, **characterized in that** the fastening portion or the cover itself has a deformation portion with a predetermined deformation capacity or can be moved within such a deformation portion.

## Revendications

1. Volant de direction pour un véhicule, en particulier pour la fixation à une colonne de direction, comprenant au moins un recouvrement (32', 55) disposé dans la région d'un moyeu (3.3), derrière lequel, dans une position de repos, est dissimulé un coussin de gaz (14) pouvant être rempli par une charge propulsive, et qui est déplaçable dans le cas d'un accident du véhicule dans une position d'ouverture par le coussin de gaz (14) se déployant, le recouvrement étant articulé vers l'intérieur du moyeu, à l'intérieur de celui-ci ou sur le moyeu (3.3) ou étant conçu de manière à pénétrer à l'intérieur du moyeu au moins en vue d'une fixation au moins indirecte à la colonne de direction (1, 1', 1") de telle sorte que le recouvrement, pendant le mouvement d'ouverture, ne sorte pas vers l'avant hors du volant de direction dans la direction des occupants du véhicule.

2. Volant de direction selon la revendication 1, **caractérisé en ce que** le recouvrement (32) est réalisé sous la forme d'un corps de coque non déformable par le coussin de gaz (14) se déployant, lequel présente, en vue d'une fixation au moins indirecte au moyeu (3.3) ou à la colonne de direction (1, 1', 1"), une portion de fixation orientée vers l'intérieur du moyeu.

3. Volant de direction selon la revendication 2, **caractérisé en ce que** le recouvrement (55) est un constituant intégral d'un habillage de moyeu (57) et peut être détaché de celui-ci par des points de rupture ou des points d'affaiblissement ou des lignes de déchirure (56) par le coussin de gaz se déployant (14) et est articulé dans une région d'une bride de raccordement (50) du côté de la colonne de direction, au moins indirectement sur le moyeu (3.3).

4. Volant de direction selon la revendication 2 ou 3, **caractérisé en ce que** la portion de fixation ou le recouvrement lui-même présente une portion de déformation avec des possibilités de déformation prédéfinies, ou est déplaçable à l'intérieur d'une telle portion de déformation.
